Europäisches Patentamt

(19) European Patent Office

Office européen des brevets

(11) Publication number: **0 247 640**
**B1**

# (12) EUROPEAN PATENT SPECIFICATION

(45) Date of publication of the patent specification:
**27.12.90**

(51) Int. Cl.⁵: **B60T 8/60**

(21) Application number: **87109524.6**

(22) Date of filing: **19.09.80**

(60) Publication number of the earlier application in accordance
with Art. 76 EPC: **0048309**

(54) **Apparatus for generating a reference signal in a brake control system.**

(43) Date of publication of application:
**02.12.87 Bulletin 87/49**

(45) Publication of the grant of the patent:
**27.12.90 Bulletin 90/52**

(84) Designated Contracting States:
**DE FR GB**

(56) References cited:
**US-A- 3 614 172**
**US-A- 3 804 470**
**US-A- 3 840 277**
**US-A- 3 920 280**

(73) Proprietor: **CRANE CO., 300 Park Avenue, New York New York 10022(US)**

(72) Inventor: **Skarvada, Thomas, 22216 Victory Boulevard, Woodland Hills California 91367(US)**

(74) Representative: **Shindler, Nigel et al, BATCHELLOR, KIRK & CO. 2 Pear Tree Court Farringdon Road, London EC1R 0DS(GB)**

## Description

The present invention is directed to an improved apparatus for producing a conditioned wheel signal for use in generating a reference signal representative of a reference braking condition in a brake control system. The apparatus of this invention is particularly useful in brake control systems such as antiskid systems and automatic braking systems, for example.

One type of commercially used brake control system includes means for generating a reference signal, such as a reference wheel velocity or a reference wheel acceleration, for example, which is representative of a reference braking condition. Generally, the brake control system also includes means for comparing the measured wheel signal with the reference signal.

In a velocity based antiskid system, the reference signal may represent a desired wheel speed for an optimum level of braking effort and the modifying means may be designed to modify the braking effort as necessary to maintain the measured wheel speed substantially equal to the reference signal. Alternatively, the reference signal may represent a reference wheel acceleration, and it may be compared with measured wheel acceleration to determine the appropriate level of braking effort. In the following description, these two types of brake control systems will be referred to as velocity-based systems and acceleration-based systems, respectively.

A further feature of many modern brake control systems is that the reference signal is generated either wholly or partly by measuring the rotation of a braked wheel. Often, the same wheel both provides information used to generate the reference signal and is braked by an amount controlled by the brake control system. This arrangement provides the important advantage that each braked wheel can be provided with an independent brake control system if desired. A high degree of redundancy and reliability is possible with this approach in that reference signals need not be shared by multiple wheels. Furthermore, variations in wheel or tire diameter, which may cause variations in measured wheel speed or acceleration, can be readily accommodated when a separate reference signal is maintained for each wheel.

There are, of course, difficulties in generating an accurate reference signal from measurements made on a braked wheel. Perhaps most important, a braked wheel is subject to variations in its rotational velocity as the braking effort is modified. At one extreme a braked wheel may rotate at a velocity comparable to that of an unbraked wheel; while at the other extreme, a braked wheel may be locked by the brakes. Intermediate conditions include slip velocities of zero to 100 per cent of the unbraked wheel velocity. These variations in the wheel velocity as a function of braking effort complicate the generation of an accurate and reliable reference signal. An accurate reference signal may be crucial to proper brake control system operation, in that an inaccurate reference signal may result in a braking effort that is either greater or less than the optimum level.

The present invention is directed to an improved apparatus for producing a conditioned wheel signal for use in generating a reference signal in a brake control system.

According to the invention there is provided apparatus for generating a conditioned wheel signal representative of a braking condition of a braked wheel for use in a brake control system, characterised by:

means for stoñng a series of signals produced from wheel transducers and measured at preset intervals;

means for periodically determining the maximum value of the series of stored transducer signals; and means for calculating the conditioned wheel signal which is a function of the maximum value such that the conditioned wheel signal is representative of a braking condition greater than that of the average of the series of stored transducer signals.

Accordingly the apparatus of the present invention is particularly advantageous in suppressing oscillations in a reference signal. A wheel transducer signal often exhibits spurious oscillations which are not indicative of significant variations in the rotation of the wheel. For example, a wheel signal transducer or wheel itself may be eccentric. Alternatively, a wheel may be mounted on a wheel truck subject to truck oscillations about the pitch axis. This truck pitch oscillation can cause the load and consequently the tire diameter and the wheel velocity to oscillate, thereby introducing an oscillatory component into the wheel transducer signal. Truck pitch oscillation has been observed in large aircraft such as the Boeing 747, and modern brake control systems for such aircraft are preferably designed to generate reliable reference signals in spite of wheel truck oscillation.

According to this embodiment of the invention, a reference signal representative of a reference braking condition is generated from the conditioned wheel signal. This conditioned wheel signal is in turn generated from a wheel transducer signal representative of the braking conditions of a braked wheel, and is representative of a braking condition greater than that corresponding to the average wheel transducer signal during a predetermined time interval. Preferably, the magnitude of the wheel transducer signal is measured during said determined period of time to determine the maximum and minimum wheel transducer signal values and then the conditioned wheel signal is set equal to the average of the maximum and minimum values less an amount proportional to the difference between the maximum and minimum values.

In the past, brake control systems have on occasion used analog filters to filter out oscillations in the wheel transducer signals in preselected frequency ranges. In many cases, these filters have filtered the wheel transducer signal to a value substantially equal to the average wheel transducer signal. However, such filters tend not to filter out the entire oscillatory component of the wheel transducer signal, and to allow an amplitude dependent portion of this oscillatory component to pass through to form part of the conditioned signal. Thus, in prior art systems the conditioned signal may contain an undesired oscillatory component when the wheel transducer signal includes a high amplitude oscillatory component.

Furthermore, one type of prior art brake control system operates to set the conditioned signal equal to the average of the oscillating wheel transducer signal. It has been found in computer simulation that, in at least some brake control systems, improved brake control results from setting the conditioned signal to a value less than the average of the wheel transducer signals. Preferably, the conditioned signal is set equal to the average wheel transducer signal reduced by an amount corresponding to three-sixteenths of the peak-to-peak variation in the wheel transducer signal over a predetermined time interval.

By setting the conditioned signal at a value lower than the average wheel transducer signal, this embodiment of the invention responds to oscillations in the wheel transducer signal by generating a lower reference signal, which results in more aggressive braking. This tends to counteract the tendency of many brake control systems to command excessively low levels of braking in response to oscillations in the wheel transducer signal.

In the past, brake control systems have often employed means for increasing a reference signal and means for simultaneously decreasing the reference signal, such that the net change in the reference signal was equal to the difference between the changes induced by the increasing and the decreasing means. One disadvantage of this prior art approach is that the net change in the reference signal is the sum of two separate effects. If, as is often the case, both effects are functions of separate variables, then the net change is itself a composite of all of these variables.

A preferred form of the invention provides precise control over the reference signal by selectively enabling either means for increasing the reference signal or means for decreasing the reference signal, depending on the outcome of the comparison between the reference signal and the wheel signal. In that the reference signal is not increased and decreased simultaneously, the change in the reference signal can be precisely controlled. For example, when it is desired to decrease the reference signal, only those parameters which are relevant are utilized, and all other parameters, such as those which are relevant only where the reference signal is being increased, are completely excluded. A primary object of this aspect of the invention is to provide improved precision in controlling the magnitude of the reference signal. The brake control system includes means for storing a reference signal and means for comparing the stored reference signal with a wheel signal. The reference signal is ramped whenever the wheel signal corresponds to a more severe braking condition than does the reference signal. The rate at which the reference signal is ramped is adjusted according to the prior history of the reference signal: when the reference signal is ramped the rate is increased and when the reference signal is updated, the rate is decreased. In this context the term "ramp" denotes a change in the reference signal in the direction of increased braking effort and the term "update" denotes a change in the reference signal in the direction of reduced braking effort. The invention provides important advantages over certain prior art systems such as those described in U.S. 4 089 564 and U.S. 3 842 355. For example, one system of the prior art ramps the reference signal by an amount related to wheel deceleration. This prior art approach suffers from limited dynamic range of the ramp rate, in that the acceleration of a physical object such as a wheel is limited. Neither of the above systems provides a rate signal which adapts to prevailing braking characteristics in this way.

This embodiment of the present invention thus provides the further advantage that the system responds appropriately with a high ramp rate to a locked wheel.

The invention itself, together with further objects and attendant advantages, will be best understood by reference to the following detailed description taken in connection with the appended drawings.

Figure 1 is a schematic representation of a brake control system including an antiskid control system.

Figure 2 is a schematic representation of the functional components of the antiskid control system of Figure 1.

Figures 3a and 3b are flow charts of the reference velocity determination portion of the antiskid control system of Figure 2.

## DETAILED DESCRIPTION OF A PREFERRED EMBODIMENT

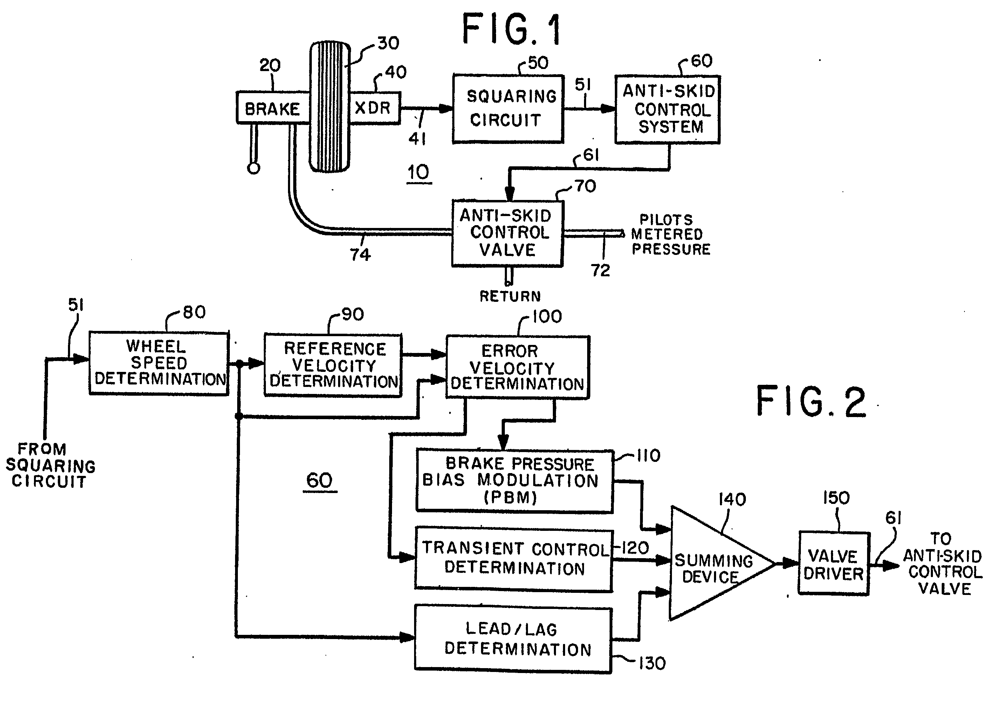

Referring now to the drawings, a preferred embodiment of the apparatus for determining a reference signal of the present invention will be described in connection with Figures 1 and 2. Figure 1 shows the major components of an antiskid brake control system 10 which provides brake control for the brake 20 of a rotatable wheel 30. The system 10 includes a wheelspeed transducer 40 which produces a sinusoidal signal on line 41 having a frequency proportional to the angular velocity of the wheel 30. The signal on line 41 is shaped in a squaring circuit 50 and is then supplied as a wheel speed signal to an antiskid control system 60 via line 51. The antiskid control system 60 monitors the wheel transducer signal on line 51. When the wheel transducer signal indicates that the wheel 30 is about to go into a skid due to excessive braking force, the antiskid system 60 generates a valve driver signal on line 61. The antiskid control valve 70 is positioned in the brake line 72 which supplies brake fluid under pressure to the brake 20, and the valve 70 operates to reduce the brake pressure applied to the brake 20.

In this preferred embodiment, the brake pressure in line 72 is the metered pressure determined by the vehicle operator by means of conventional hydraulic controls. As long as the wheel 30 is not braked so severely as to go into a skid the full metered pressure in the line 72 is passed by the valve 70 via the line 74 to the brake 20. However, if the metered brake pressure exceeds the skid threshold and drives the wheel 30 into a skid, the antiskid system 60 will generate a signal on line 61 which causes the valve 70 to reduce the pressure in the line 74 to a value less than the metered pressure. By reducing the pressure applied to the brake 30 the braking torque is reduced and the wheel 30 is prevented from skidding.

Figure 2 shows a schematic representation of the antiskid system 60 of Figure 1, including a wheel speed determination unit 80 which uses the wheel transducer signal on line 51 as an input and generates an output signal representative of measured wheel speed. This wheel speed signal is supplied as an input to a reference velocity determination unit 90 for determining a reference velocity signal as on output representative of the desired wheel speed for optimum braking. This reference velocity signal is applied as an input to an apparatus 100 for determining an error velocity signal representative of the difference between the measured wheel speed signal and the reference velocity signal. The error velocity signal is applied as an input to two separate control units: the brake pressure bias modulation unit, or PBM, unit 110, and the transient control determination unit 120.

The PBM unit 110 processes the error velocity signal to arrive at a time averaged, modulated signal representative of the optimum braking pressure. This signal is modulated to either increase or decrease the applied brake pressure as needed to prevent wheel skidding while maintaining a high, effective level of braking.

Because the PBM unit 110 uses a time average, it will on occasion be unable to respond quickly enough to prevent wheel skid. For example, when a braked wheel suddenly enters a tar strip or an ice patch or a wet surface, the skid threshold will abruptly fall and the wheel may enter a deep skid if heavily braked. Under these conditions the transient control unit 120 responds to a large error velocity signal by commanding a sharp and sudden reduction in applied brake pressure.

The wheel speed signal is also applied as an input to a lead/lag unit 130 which responds to changes in the wheel speed signal to anticipate trends and to command an early modification in brake pressure to anticipate skids.

Outputs from the PBM unit 110, the transient control unit 120 and the lead/lag unit 130 are summed in the summing device 140 to produce a composite brake control signal which is amplified by the valve driver 150 and then applied as a control signal via line 61 to the antiskid control valve.

The foregoing description of the brake control system 10 is provided to set forth the environment of a preferred embodiment of the reference signal determination apparatus of this invention. Individual components of this environment do not form a part of the present invention, and for that reason have not been described in detail here. Furthermore, those skilled in the art are familiar with various forms of these components. For example, one form of the wheel speed determination unit 80, the error velocity determination unit 100, the PBM unit 110, the transient control unit 120, and the lead/lag unit 130 is shown in U.S. Patent No. 3 724 916, issued April 3, 1973 to Edgar A. Hirzel, and entitled "Controlled Wheel Braking System". Other forms of the wheel speed determination unit 80 are described in U.S. Patent No. 4 056 287, issued November 1, 1977 to Wolfgang Gudat; and in U. S. Patent No. 4 125 295, issued November 14, 1978 to Gerhard Ruhnam, et al.

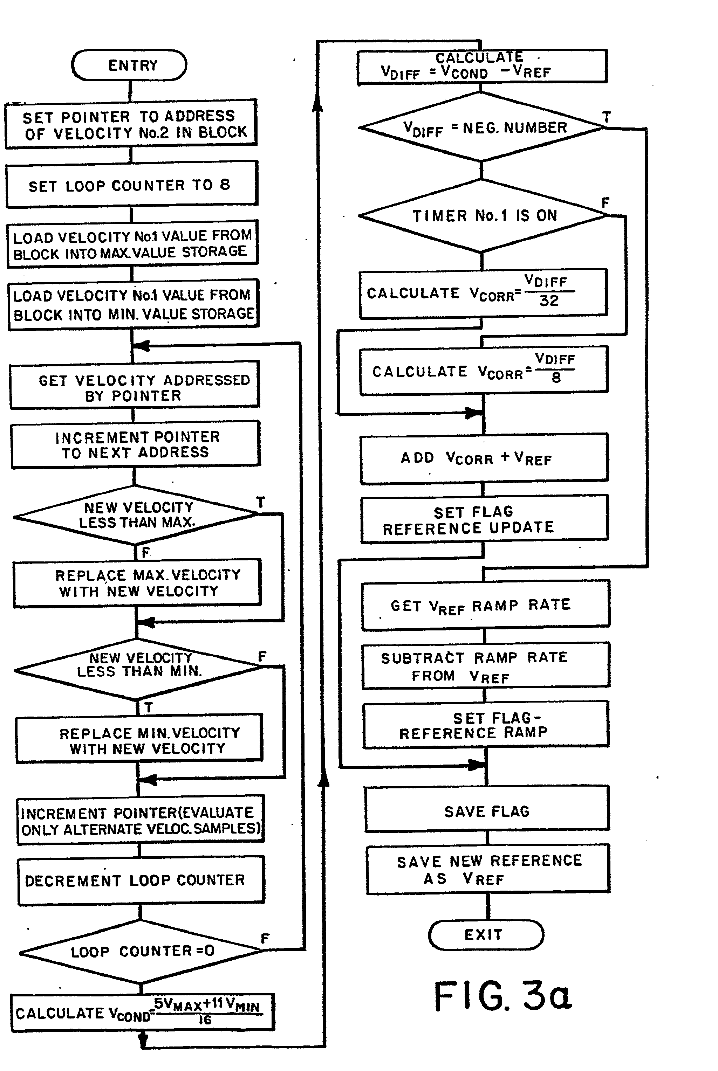

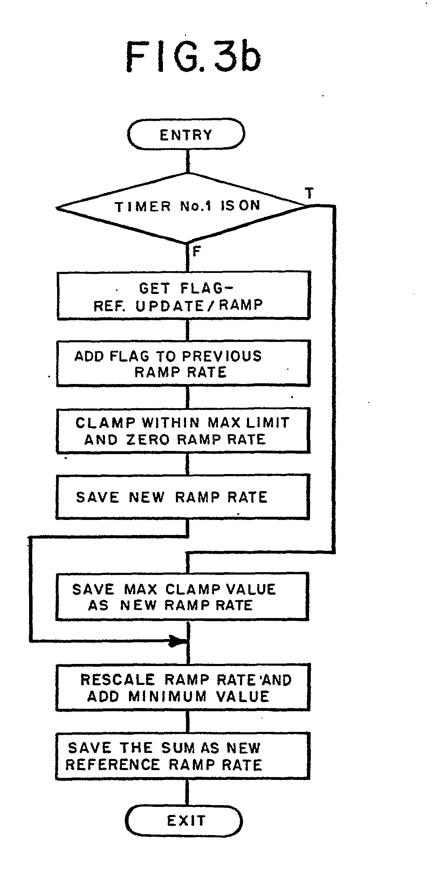

The present invention is an improved apparatus for determining a reference signal in a brake control system. A presently preferred embodiment of this invention, corresponding to the reference velocity determination unit 90 of Figure 2, will be described in conjunction with the flow chart of Figures 3a and 3b.

The presently preferred embodiment of the present invention is implemented as a programmed microprocessor. The microprocessor is a Z-80 CPU manufactured by Zilog, Inc., Cupertino, California. The program is presented in flow chart form in Figures 3a and 3b and is listed in assembly language form in Tables 1a, 1b, and 1c. This program operates to process inputs indicative of wheel speed to generate a signal representative of a reference velocity. The wheel speed input is provided as a set of the sixteen most recent wheel speed measurements. In this embodiment, wheel speed is determined about once every five milliseconds as a sixteen-bit digital signal. The wheel speed input is made up of the most recent sixteen-bit wheel speed signal and the fifteen previous sixteen-bit wheel speed signals, which are stored in consecutive order in a block of 32 eight-bit words of memory. Thus, the most recent wheel speed signal is stored in location N and N+1 of memory; the previous wheel speed signal is stored in locations N+2 and N+3; and so forth. The wheel speed block of measurements forms a first-in first-out file in which the sixteen most recent wheel speed signals are stored. In the flow chart of Figure 3, "Velocity No. 1" refers to the current wheel speed measurement, "Velocity No. 2" refers to the wheel speed measurement immediately preceding the current measurement, and so forth.

Referring now to Figure 3a, the preferred embodiment of this invention first searches every other wheel speed measurement in the block of sixteen wheel speed measurements and sets $V_{MAX}$ equal to the greatest wheel speed measurement and $V_{MIN}$ equal to the smallest wheel speed measurement of those searched. The first iterative loop in Figure 3a determines $V_{MAX}$ and $V_{MIN}$ in a single pass.

Next a conditioned wheel speed signal, $V_{COND}$, is generated and is set to a value no greater than the average wheel speed $1/2(V_{MAX} + V_{MIN})$. In this embodiment, $V_{COND}$ is set equal to $1/2(V_{MAX} + V_{MIN})$ -

4

$3/16(V_{MAX} - V_{MIN})$. Thus, the amount by which $V_{COND}$ is less than the average of $V_{MAX}$ and $V_{MIN}$ is proportional to the difference between $V_{MAX}$ and $V_{MIN}$. The larger the oscillatory component of the wheel speed measurement in the selected frequency range, the more $V_{COND}$ is reduced below the average.

In this embodiment the velocity block contains sixteen measurements, each separated by about five milliseconds. Therefore, an oscillatory component having a half period less than about 70 milliseconds and greater than some upper limit will be effectively suppressed. Of course the frequency range in which oscillations are rejected may readily be modified by changing either the sampling rate or the number and choice of measurements stored in the velocity block.

After $V_{COND}$ has been determined, it is compared with $V_{REF}$, the reference velocity established during the last pass through the program, to determine which is the greater. Depending on which is the greater, $V_{REF}$ will then either be updated to a larger value, corresponding to a higher reference velocity, or be ramped to a smaller value, corresponding to a lower reference velocity.

Assuming that $V_{REF}$ is less than $V_{COND}$, $V_{REF}$ is updated by an amount proportional to $V_{DIFF}$, where $V_{DIFF}$ is equal to $V_{COND} - V_{REF}$. Assuming a constant $V_{COND}$, this causes $V_{REF}$ to asymptotically approach $V_{COND}$. A timer is used to set the proportionality constant which determines the rate at which $V_{REF}$ approaches $V_{COND}$. If the timer is on, $V_{REF}$ is updated by 1/32 of $V_{DIFF}$, while if the timer is off, $V_{REF}$ is updated by 1/8 of $V_{DIFF}$. This feature has been found useful in providing rapid update of $V_{REF}$ under certain conditions, when the timer is off.

If, on the other hand, $V_{REF}$ is greater than $V_{COND}$, $V_{REF}$ will be ramped by an amount equal to two times a predetermined amount, the ramp rate. The ramp rate is a constant which is determined in the program flowcharted in Figure 3b, and is not a function of $V_{DIFF}$, as is the correction during the update of $V_{REF}$.

After $V_{REF}$ has been updated or ramped, as appropriate, it is stored as the new $V_{REF}$, for use in conjunction with other parts of the antiskid system, such as the PBM unit, for example, in the generation of an appropriate skid control signal. In general, $V_{REF}$ is representative of the desired wheel speed signal for optimum braking. Since $V_{REF}$ is either updated or ramped in each pass through the program, the change in $V_{REF}$ is only a function of the appropriate variables. Update is a function of the difference between $V_{REF}$ and $V_{COND}$, and ramping is a function of the ramp rate. In that ramping and updating are not performed simultaneously, the change in $V_{REF}$ can be made a precise function of only the appropriate variables.

The manner in which $V_{REF}$ is changed (updated or ramped) is used as an input to the program flowcharted in Figure 3b. This program modifies the ramp rate by an amount which varies, depending on whether $V_{REF}$ has been updated or ramped.

As shown in Figure 3b, the ramp rate is modified by adding to it an amount which is itself a function of whether $V_{REF}$ has been updated or ramped. Thus if $V_{REF}$ has been updated, indicating that $V_{REF}$ was less than $V_{COND}$, then the ramp rate is decreased or decremented by a adding a negative number to it. In this way the rate of which $V_{REF}$ is ramped is decreased, and therefore the number of $V_{REF}$ updates is decreased. On the other hand, if $V_{REF}$ has been ramped, indicating that $V_{COND}$ is less than the $V_{REF}$, then the ramp rate is increased or incremented by adding a positive number to it. This increases the rate at which $V_{REF}$ is ramped, and therefore increases the rate at which $V_{REF}$ approaches $V_{COND}$. This tends to increase the number of $V_{REF}$ updates.

Thus, the ramp rate is established as a dynamic balance which tends to seek a certain $V_{REF}$ updating frequency relative to ramping. Too many updates cause the ramp rate to be reduced, which in turn tends to reduce the number of updates. Too few updates cause the ramp rate to be increased, which in turn tends to increase the number of updates. The sensitivity and operation of this embodiment can be altered by changing the values of the positive and negative numbers which are added to the ramp rate after ramping and updating, respectively. In this embodiment, the ramp rate is increased by about .0001 feet per second each time $V_{REF}$ is ramped and is decreased by about .0008 feet per second each time $V_{REF}$ is updated.

The program of Figure 3b also includes means, responsive to a timer, for setting the ramp rate to a maximum value whenever the timer is on. This feature is used to provide a high ramp rate, and therefore a low $V_{REF}$, during certain periods of operation, when the timer is on. This program also includes means for clamping the ramp rate between certain maximum and minimum values and for adding a DC offset to the ramp rate to ensure that the ramp rate is always greater than a certain minimum value. The term "rate signal" is used in the following claims to refer to signals such as the ramp rate. This preferred embodiment is listed in assembly language in Tables 1a, 1b, and 1c. Table 1a corresponds to the program of Figure 3a; Table 1b corresponds to the program of Figure 3b; and Table 1c provides a listing of the constants and variables used by the programs of Tables 1a and 1b. In order to better understand these listings, it should be understood that the wheel speed measurements stored in the velocity block as VELOC1 through VELOC7 are stored as sixteen-bit binary numbers scaled to .1 foot per second per bit. $V_{REF}$ corresponds to the variable REFER which is a twenty-four-bit binary number scaled to about .000391 foot per second per bit, and the ramp rate corresponds to RAMP and is scaled identically to REFER. Preferably the programs of Tables 1a and 1b are both executed after each wheel speed measurement is made, about once every 5 milliseconds in this embodiment.

In simulation testing, the embodiment described above has been shown to generate a reference signal which adapts quickly and appropriately to changing braking conditions such as changes in the coefficient of friction between the braked wheel and the support surface. Furthermore, this embodiment responds to oscillations in the measured wheel speed signal in a manner which both suppresses undesired oscillations and appropriately reduces the magnitude of the conditioned signal used to form the reference signal.

Of course, it should be understood that various changes and modifications to the preferred embodiment described herein will be apparent to those skilled in the art. For example, the invention is not limited to digital embodiments or to velocity based systems. On the contrary, it may be embodied in analog systems, and it may be used to generate an acceleration reference in acceleration based brake control systems. Other changes and modifications can be made within the scope of the following claims.

## TABLE 1a

```
;
;          REFERENCE VELOCITY DETERMINATION
;          ***********************************
;
REFX       LD HL,VELOC2
           LD B,7 ;  LOOP COUNT
           EXX
           LD DE,(VELOC1)
           LD B,D
           LD C,E
           EXX
;
REFA   _   LD A,(HL) ; SET LOW BYTE
           EX AF,AF
           INC HL
           LD A,(HL) ; SET HIGH BYTE
           INC HL
           EXX
           LD H,A
           EX AF,AF
           LD L,A ; MOVE VELOCITY TO HL
           CP A
           SBC HL,DE ; COMPARE WITH MAX
           JR NC,REFB
           ADD HL,DE ; RECOVER NEW VELOCITY
           JR REFC
REFB       ADD HL,DE ; RECOVER NEW VELOCITY
           LD D,H
           LD E,L
REFC       CP A
           SBC HL,BC ; COMPARE WITH MIN VELOCITY
           JR NC,REFD
           LD C,A
           EX AF,AF
           LD B,A ;    SAVE NEW AS MIN
```

TABLE 1a (continued...)

```
REFD    EXX
        INC HL ;    SKIP EVERY OTHER VELOCITY IN BLOCK
        INC HL
        DJNZ REFA ; LOOP FOR WHOLE VELOCITY BLOCK
;
        EXX
        LD H,D
        LD L,E ; MOVE MAX VELOCITY
        XOR A
        SBC HL,BC ; GET DIFFERENCE
        EX DE,HL
        ADD HL,BC
        SRL D
        RR E ; DIVIDE BY 2
        XOR A
        SBC HL,DE
        SRL D
        RR E
        ADD HL,DE
        SRL D
        RR E
        XOR A
        SBC HL,DE
        SRL H
        RR L
        LD DE,(REFER+1)
        XOR A
        SBC HL,DE
        JR C,REFE
;
;       REFERENCE UPDATE
;
        LD C,L
        LD L,H
        LD H,O
        LD A,(FORTIM); GET TIMER VALUE
        CP O
        JR NZ,REFK
        JR REFF;        FINE TUNE ADDRESS DURING TESTING
        SLA C
        ADC HL,HL
        SLA C
        ADC HL,HL
REFF    SLA C
        ADC HL,HL
        SLA C
        ADC HL,HL
REFK    SLA C
        ADC HL,HL
```

TABLE 1a (continued...)

```
                    SLA C
                    ADC HL,HL
                    SLA C
                    ADC HL,HL
                    LD A,(REFER)
                    ADD A,C
                    ADC HL,DE
                    LD (REFER+1),HL;    UPDATE REFERENCE
                    LD (REFER),A
                    LD DE,RTDOWN
                    JR REFG
            ;
            ;       REFERENCE RAMP
            ;
            REFE    EX DE,HL  ;  MOVE REFERENCE TO HL
                    LD A,(RAMP)
                    LD C,A
                    LD A,(REFER);       GET SCALER
                    LD DE,0
                    SUB C
                    SBC HL,DE;          SUBTRACT CARRY IF ANY
                    JR C,REFH
                    SUB C
                    SBC HL,DE
                    JR NC,REFI
            REFH    LD HL,0
            REFI    LD (REFER),A; SAVE NEW SCALER
                    LD (REFER+1),HL; SAVE NEW REFERENCE
                    LD DE,RTUP
            ;
            REFG    LD (SCORE),DE
            ;
                    LD DE,MAXREF; REFERENCE LIMIT (ANY SPEED ABOVE
            ;                         THIS CONSTITUTES A FAILURE)
                    EX DE,HL
                    XOR A
                    SBC HL,DE
                    JR NC,REFJ; JUMP, REFERENCE WITHIN RANGE
                    LD DE,MAXREF;       OTHERWISE CLAMP REFERENCE
                    LD (REFER+1),DE
            REFJ    RET;        RETURN
```

## TABLE 1b

```
;           REFERENCE RAMP RATE DETERMINATION
;           ************************************
;
AVDECX      LD A,(FORTIM)
            CP 0
            JR NZ,AVDECC
            LD DE,(SCORE)
            LD HL,(DECEL)
            ADD HL,DE
            LD (DECEL),HL
            EX DE,HL
            BIT 7,D
            JR Z,AVDECB
            LD DE,0
            JR AVDECA
AVDECB      LD HL,MAXDEC*256
            XOR A
            SBC HL,DE
            JR NC,AVDECA
AVDECC      LD DE,MAXDEC*256
AVDECA      LD (DECEL),DE
            LD A,D
            ADD A,MINDEC
            LD (RAMP),A
            RET;        RETURN
```

## TABLE 1c

```
;
;           *******
;           *     *
;           * RAM *
;           *     *
;           *******
;
DECEL       EQU 80EH; REF RAMP RATE (TWO BYTES)
ERROR       EQU 815H; ERROR VALUE FOR CONTROL (TWO BYTES)
FORTIM      EQU 811H; TIMER FOR SLOW REFER. UPDATE
RAMP        EQU 810H; TIME CONSTANT FOR REFERENCE RATE
REFER       EQU 807H; REFERENCE (THREE BYTES)
SCORE       EQU 81BH; TEMP STORAGE FOR REFER RATE GENERATION
VELOC1      EQU 820H; NEW VELOCITY
VELOC2      EQU 822H; PREVIOUS VELOCITY (ONE LOOP TIME BACK)
VELOC3      EQU 824H;    "        "     (TWO LOOP TIMES BACK)
VELOC4      EQU 826H;    "        "     (THREE LOOP TIMES BACK)
VELOC5      EQU 828H;    "        "     (FOUR LOOP TIMES BACK)
VELOC6      EQU 82AH;    "        "     (FIVE LOOP TIMES BACK)
```

### TABLE 1c (continued...)

```
VELOC7    EQU 82CH;    "         "      (SIX LOOP TIMES BACK)
VELOC8    EQU 82EH;    "         "      (SEVEN LOOP TIMES BACK)
VELOC9    EQU 830H;    "         "      (EIGHT LOOP TIMES BACK)
VELOC10   EQU 832H;    "         "      (NINE LOOP TIMES BACK)
VELOC11   EQU 834H;    "         "      (TEN LOOP TIMES BACK)
VELOC12   EQU 836H;    "         "      (ELEVEN LOOP TIMES BACK)
VELOC13   EQU 838H;    "         "      (TWELVE LOOP TIMES BACK)
VELOC14   EQU 83AH;    "         "      (THIRTEEN LOOP TIMES BACK)
VELOC15   EQU 83CH;    "         "      (FOURTEEN LOOP TIMES BACK)
VELOC16   EQU 83EH;    "         "      (FIFTEEN LOOP TIMES BACK)
;


;
;         ************************
;         *                      *
;         * GENERAL CONSTANTS *
;         *                      *
;         ************************
;
MAXREF    EQU ODACH; CLAMP FOR MAX REFERENCE VALUE (350 FT/SEC)
MINDEC    EQU 24;      MINIMUM DECEL
MAXDEC    EQU 70H;     MAXIMUM DECEL
RTUP      EQU 40H
RTDOWN    EQU -200H
```

### Claims

1. Apparatus for generating a conditioned wheel signal representative of a braking condition of a braked wheel for use in a brake control system, characterised by:
means for storing a series of signals produced from wheel transducers and measured at preset intervals;
means for periodically determining the maximum value of the series of stored transducer signals; and
means for calculating the conditioned wheel signal which is a function of the maximum value such that the conditioned wheel signal is representative of a braking condition greater than that of the average of the series of stored transducer signals.

2. Apparatus according to claim 1 further comprising means for determining the minimum value of the series of stored transduer signals, wherein the calculating means calculates the conditioned wheel signal as a weighted average of the maximum and minimum values.

3. Apparatus according to claim 2 in which the said conditioned wheel signal is generated by subtracting from the average, a predetermined fraction of the difference between the said maximum and minimum values.

4. Apparatus according to claim 2 in which the calculating means sets the conditioned wheel signal to correspond to a value no less than the minimum value of the transducer signal.

5. Apparatus for generating a reference signal representative of a reference braking condition of a braked wheel (30) in an antiskid brake control system; said control system including means (80) according to any of claims 1 to 4 for generating a wheel signal representative of a braking condition of a braked wheel (30), and said apparatus comprising: means for storing and modifying the reference signal by increasing or "updating" the reference signal by a predetermined amount when the wheel signal is greater than the reference signal, and by decreasing or "ramping" the reference signal when the wheel signal is less than the reference signal, said apparatus being characterised by:
means for setting and storing a ramp rate which determines the size of each decrease of the reference signal, said setting means including:

means for incrementing the ramp rate by a first predetermined amount each time the wheel signal is determined to be less than the reference signal;
and means for decrementing the ramp rate by a second predetermined amount each time the wheel signal is determined to be greater than the reference signal.

6. The apparatus of claim 5 wherein the reference signal is representative of a reference velocity;
wherein the wheel signal is representative of the rotational velocity of the braked wheel;
wherein the ramp rate increment means increases the stored ramp rate when the reference signal is greater than the wheel signal by more than a first value;
wherein the ramp rate decrement means decreases the stored ramp rate when the wheel signal is greater than the reference signal by more than a second value; and
wherein the modifying means modifies the reference signal by an amount corresponding to the magnitude of the ramp rate when the reference signal is greater than the wheel signal by more than a third value.

7. The apparatus of claim 6, wherein the modifying means decreases the reference signal by an amount corresponding to the magnitude of the ramp rate.

8. The apparatus of claim 5, wherein the modifying means comprises;
means for generating a first control signal when the reference signal is greater than the wheel signal by more than a first predetermined amount;
means for generating a second control signal when the wheel signal is greater than the reference signal by more than a second predetermined amount;
first means, operative only in response to one of the first and second control signals for modifying the stored reference signal in a first direction by an amount corresponding to the ramp rate to correspond to a more severe braking condition; and
second means, operative only in response to the other of the first and second control signals, for modifying the stored reference signal in a second direction, opposed to the first direction.

9. The apparatus of claim 8 wherein the first means decreases the reference signal.

10. The apparatus of claim 8 wherein the first means is operative only in response to the first control signal and the second means is operative only in response to the second control signal.

11. The apparatus of claim 8 wherein the reference signal is representative of a reference velocity;
wherein the wheel signal is representative of the rotational velocity of the braked wheel (30);
wherein the first means modifies the stored reference signal to correspond to a lower reference velocity; and
wherein the second means modifies the stored reference signal to correspond to a higher reference velocity.

**Patentansprüche**

1. Eine Vorrichtung zur Erzeugung eines konditionierten Radsignals, das für einen Bremszustand eines gebremsten Rades repräsentativ ist, zur Verwendung in einem Bremsensteuersystem, gekennzeichnet durch:
eine Einrichtung zur Speicherung einer Reihe von Signalen, die von Radwandlern erzeugt und in vorbestimmten Intervallen gemessen werden;
eine Einrichtung zur periodischen Bestimmung des Maximalwertes der Reihe von gespeicherten Wandlersignalen; und
eine Einrichtung zur Berechnung des konditionierten Radsignals, welches eine Funktion des Maximalwertes derart ist, daß das konditionierte Radsignal repräsentativ für einen Bremszustand ist, der heftiger als derjenige des Mittelwertes der Reihe von gespeicherten Wandlersignalen ist.

2. Vorrichtung nach Anspruch 1, die eine Einrichtung zur Bestimmung des Minimalwertes der Reihe von gespeicherten Wandlersignalen umfaßt, wobei die Berechnungseinrichtung das konditionierte Radsignal als ein gewichtetes Mittel des Maximal- und Minimalwertes berechnet.

3. Vorrichtung nach Anspruch 2, worin das konditionierte Radsignal durch Abziehen eines vorbestimmten Teils der Differenz zwischen dem Maximumwert und dem Minimumwert von dem Mittelwert berechnet wird.

4. Vorrichtung nach Anspruch 2, wobei die Berechnungseinrichtung das konditionierte Radsignal so einstellt, daß es einem Wert entspricht, der nicht kleiner als der Minimumwert des Wandlersignals ist.

5. Vorrichtung zur Erzeugung eines Referenzsignals, das repräsentativ für einen Referenzbremszustand eines gebremsten Rades (30) in einem Antiblockierbremsensteuersystem ist; wobei das Steuersystem eine Einrichtung (80) nach einem der Ansprüche 1 bis 4 für die Erzeugung eines Radsignals, das repräsentativ für einen Bremszustand eines gebremsten Rades (30) ist, enthält, und wobei die Vorrichtung umfaßt: eine Einrichtung zur Speicherung und Modifizierung des Referenzsignals durch Erhöhung oder «Aktualisieren» des Referenzsignals um einen vorbestimmten Wert, wenn das Radsignal größer als das Referenzsignal ist, und durch Verringern oder «in Rampen Abstufen» des Referenzsignals, wenn das Radsignal geringer als das Referenzsignal ist, wobei die Vorrichtung gekennzeichnet ist durch:
eine Einrichtung zum Einstellen und Speichern einer Rampenrate, welche die Größe von jeder Verringerung des Referenzsignals bestimmt, wobei die Einstelleinrichtung enthält:

eine Einrichtung zum Inkrementieren der Rampenrate um einen ersten vorbestimmten Betrag, jedesmal, wenn das Radsignal bestimmt ist, geringer als das Referenzsignal zu sein;

und eine Einrichtung zum Dekrementieren der Rampenrate um einen zweiten vorbestimmten Betrag, jedesmal, wenn das Radsignal bestimmt ist, größer als das Referenzsignal zu sein.

6. Eine Vorrichtung nach Anspruch 5, wobei das Referenzsignal repräsentativ für eine Referenzgeschwindigkeit ist;

wobei das Radsignal repräsentativ für eine Drehgeschwindigkeit des gebremsten Rades ist;

wobei die Rampenrateninkrementierungseinrichtung die gespeicherte Rampenrate, wenn das Referenzsignal größer als das Radsignal ist, um mehr als einen ersten Wert vergrößert;

wobei die Rampenratendekrementierungseinrichtung die gespeicherte Rampenrate, wenn das Radsignal größer als das Referenzsignal ist, um mehr als einen zweiten Wert verkleinert; und

wobei die Modifizierungseinrichtung das Referenzsignal um einen Betrag modifiziert, der einer Größe der Rampenrate entspricht, wenn das Referenzsignal um mehr als einen dritten Wert größer als das Radsignal ist.

7. Vorrichtung nach Anspruch 6, wobei die Modifizierungseinrichtung das Referenzsignal um einen Betrag verringert, der der Größe der Rampenrate entspricht.

8. Vorrichtung nach Anspruch 5, wobei die Modifizierungseinrichtung umfaßt: eine Einrichtung zur Erzeugung eines ersten Steuersignals, wenn das Referenzsignal um mehr als ein erster vorbestimmter Betrag größer als das Radsignal ist;

eine Einrichtung zur Erzeugung eines zweiten Steuersignals, wenn das Radsignal um mehr als ein zweiter vorbestimmter Betrag größer als das Referenzsignal ist;

eine erste Einrichtung, die nur in Reaktion auf eines von dem ersten und zweiten Steuersignal arbeitet, zum Modifizieren des gespeicherten Referenzsignals in einer ersten Richtung um einen Betrag, der der Rampenrate entspricht, um einem heftigeren Bremszustand zu entsprechen; und

eine zweite Einrichtung, die nur auf das andere des ersten und zweiten Steuersignals reagiert, zum Modifizieren des gespeicherten Referenzsignals in einer zweiten Richtung, die zu der ersten Richtung entgegengesetzt ist.

9. Die Vorrichtung nach Anspruch 8, wobei die erste Einrichtung das Referenzsignal verringert.

10. Die Vorrichtung nach Anspruch 8, wobei die erste Einrichtung nur in Reaktion auf das erste Steuersignal und die zweite Einrichtung nur in Reaktion auf das zweite Steuersignal arbeitet.

11. Die Vorrichtung nach Anspruch 8, wobei das Referenzsignal repräsentativ für eine Referenzgeschwindigkeit ist;

wobei das Radsignal repräsentativ für eine Drehgeschwindigkeit des gebremsten Rades (30) ist;

wobei die erste Einrichtung das gespeicherte Referenzsignal modifiziert, damit es einer geringeren Referenzgeschwindigkeit entspricht, und wobei die zweite Einrichtung das gespeicherte Referenzsignal modifiziert, damit es einer höheren Referenzgeschwindigkeit entspricht.

**Revendications**

1. Appareil pour générer un signal de roue conditionné représentatif d'une condition de freinage d'une roue soumise à un freinage, destiné à être utilisé dans un système de commande de frein, caractérisé par:

un moyen pour stocker une série de signaux produits depuis des transducteurs situés au niveau de la roue et mesurés à des intervalles prédéterminés;

un moyen pour déterminer périodiquement la valeur maximum de la série de signaux de transducteur stockés; et

un moyen pour calculer le signal de roue conditionné qui est une fonction de la valeur maximum de telle sorte que le signal de roue conditionné est représentatif d'une condition de freinage plus grande que celle la moyenne de la série de signaux de transducteur stockés.

2. Appareil selon la revendication 1 comprenant en outre un moyen pour déterminer la valeur minimum de la série de signaux de transducteur stockés, dans lequel le moyen de calcul calcule le signal de roue conditionné comme étant une moyenne pondérée des valeurs maximum et minimum.

3. Appareil selon la revendication 2, dans lequel le signal de roue conditionné est généré en soustrayant de la moyenne une fraction prédéterminée de la différence qui existe entre les valeurs maximum et minimum.

4. Appareil selon la revendication 2, dans lequel le moyen de calcul fait en sorte que le signal de roue conditionné corresponde à une valeur non inférieure à la valeur minimum du signal de transducteur.

5. Appareil pour générer un signal de référence représentatif d'une condition de freinage de référence d'une roue freinée (30) dans un système de commande de frein antipatinage; le système de commande incluant un moyen (80) selon n'importe laquelle des revendications 1 à 4 pour générer un signal de roue représentatif d'une condition de freinage d'une roue freinée (30), et l'appareil comprenant: un moyen pour stocker et modifier le signal de référence en augmentant ou «actualisant» le signal de référence d'une valeur prédéterminée lorsque le signal de roue est plus grand que le signal de référence, et en diminuant ou «déplaçant sur la pente» le signal de référence lorsque le signal de roue est inférieur au signal de référence, l'appareil etant caractérisé par:

un moyen pour déterminer et pour stocker un niveau de rampe qui détermine la taille de chaque diminution du signal de référence, ce moyen de détermination incluant:

un moyen pour incrémenter le niveau de rampe d'une première valeur prédéterminée chaque fois que le signal de roue est trouvé plus petit que le signal de référence;

et un moyen pour décrémenter le niveau de rampe d'une seconde valeur prédéterminée chaque fois que le signal de roue est trouvé plus grand que le signal de référence.

6. Appareil selon la revendication 5, dans lequel le signal de référence est représentatif d'une vitesse de référence;

dans lequel le signal de roue est représentatif de la vitesse de rotation de la roue soumise au freinage;

dans lequel le moyen d'incrémentation du niveau de rampe augmente le niveau de rampe stocké lorsque le signal de référence est plus grand que le signal de roue de plus d'une première valeur;

dans lequel le moyen de décrémetation du niveau de rampe diminue le niveau de rampe stocké lorsque le signal de roue est plus grand que le signal de référence de plus d'une seconde valeur; et

dans lequel le moyen de modification modifie le signal de référence d'une valeur qui correspond à l'amplitude du niveau de rampe lorsque le signal de référence est plus grand que le signal de roue de plus d'une troisième valeur.

7. Appareil selon la revendication 6, dans lequel le moyen de modification diminue le signal de référence d'une valeur qui correspond à l'amplitude du niveau de rampe.

8. Appareil selon la revendication 5, dans lequel le moyen de modification comprend:

un moyen pour générer un premier signal de commande lorsque le signal de référence est plus grand que le signal de roue de plus d'une première valeur prédéterminée;

un moyen pour genérer un second signal de commande lorsque le signal de roue est plus grand que le signal de référence de plus d'une seconde valeur prédéterminée;

un premier moyen, qui fonctionne seulement en réponse à un des premier et second signaux de commande pour modifier le signal de référence stocké, suivant une première direction, d'une valeur qui correspond au niveau de rampe afin de correspondre à une condition de freinage plus forte; et

un second moyen, qui fonctionne seulement en réponse à l'autre des premier et second signaux de commande pour modifier le signal de référence stocké suivant une seconde direction opposée à la première direction.

9. Appareil selon la revendication 8, dans lequel le premier moyen diminue le signal de référence.

10. Appareil selon la revendication 8, dans lequel le premier moyen fonctionne seulement en réponse au premier signal de commande et dans lequel le second moyen fonctionne seulement en réponse au second signal de commande.

11. Appareil selon la revendication 8, dans lequel le signal de référence est représentatif d'une vitesse de référence;

dans lequel le signal de roue est représentatif de la vitesse de rotation de la roue freinée (30);

dans lequel le premier moyen modifie le signal de référence stocké afin de correspondre à une vitesse de référence plus faible; et

dans lequel le second moyen modifie le signal de référence stocké afin de correspondre à une vitesse de référence plus élevée.

# FIG.1

# FIG.2

EP 0 247 640 B1

EP 0 247 640 B1

ENTRY

SET POINTER TO ADDRESS
OF VELOCITY No.2 IN BLOCK

SET LOOP COUNTER TO 8

LOAD VELOCITY No.1 VALUE FROM
BLOCK INTO MAX.VALUE STORAGE

LOAD VELOCITY No.1 VALUE FROM
BLOCK INTO MIN. VALUE STORAGE

GET VELOCITY ADDRESSED
BY POINTER

INCREMENT POINTER
TO NEXT ADDRESS

NEW VELOCITY
LESS THAN MAX.   T
F

REPLACE MAX.VELOCITY
WITH NEW VELOCITY

NEW VELOCITY
LESS THAN MIN.   F
T

REPLACE MIN.VELOCITY
WITH NEW VELOCITY

INCREMENT POINTER(EVALUATE
ONLY ALTERNATE VELOC.SAMPLES)

DECREMENT LOOP COUNTER

LOOP  COUNTER =0   F

$$\text{CALCULATE } V_{COND} = \frac{5V_{MAX} + 11 V_{MIN}}{16}$$

CALCULATE
$V_{DIFF} = V_{COND} - V_{REF}$

$V_{DIFF}$ = NEG. NUMBER   T

TIMER No.1 IS ON   F

CALCULATE $V_{CORR} = \dfrac{V_{DIFF}}{32}$

CALCULATE $V_{CORR} = \dfrac{V_{DIFF}}{8}$

ADD $V_{CORR} + V_{REF}$

SET FLAG
REFERENCE UPDATE

GET $V_{REF}$ RAMP RATE

SUBTRACT RAMP RATE
FROM $V_{REF}$

SET FLAG-
REFERENCE RAMP

SAVE FLAG

SAVE NEW REFERENCE
AS $V_{REF}$

EXIT

FIG. 3a

# FIG.3b

```
         ( ENTRY )
             │
             ▼
      ╱─────────────╲         T
     ╱  TIMER No.1 IS ON ╲────────┐
      ╲─────────────╱             │
             │F                   │
             ▼                    │
   ┌─────────────────┐           │
   │    GET FLAG-     │           │
   │ REF. UPDATE/RAMP │           │
   └─────────────────┘           │
             │                    │
             ▼                    │
   ┌─────────────────┐           │
   │ ADD FLAG TO PREVIOUS │      │
   │    RAMP RATE     │           │
   └─────────────────┘           │
             │                    │
             ▼                    │
   ┌─────────────────┐           │
   │ CLAMP WITHIN MAX LIMIT │    │
   │ AND ZERO RAMP RATE │        │
   └─────────────────┘           │
             │                    │
             ▼                    │
   ┌─────────────────┐           │
   │ SAVE NEW RAMP RATE │         │
   └─────────────────┘           │
        │        │               │
        │        └───────────────┤
        │                        │
        ▼                        │
   ┌─────────────────┐           │
   │ SAVE MAX CLAMP VALUE │      │
   │  AS NEW RAMP RATE │◄─────────┘
   └─────────────────┘
        │
        └──────►│
               ▼
   ┌─────────────────┐
   │ RESCALE RAMP RATE AND │
   │ ADD MINIMUM VALUE │
   └─────────────────┘
               │
               ▼
   ┌─────────────────┐
   │ SAVE THE SUM AS NEW │
   │ REFERENCE RAMP RATE │
   └─────────────────┘
               │
               ▼
           ( EXIT )
```